(19) Europäisches Patentamt
European Patent Office
Office européen des brevets

(11) **EP 3 973 255 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **20725094.5**

(22) Anmeldetag: **23.04.2020**

(51) Internationale Patentklassifikation (IPC):
**G01H 3/04** *(2006.01)*   **E01B 27/16** *(2006.01)*
**G01H 3/06** *(2006.01)*

(52) Gemeinsame Patentklassifikation (CPC):
**G01H 3/04; G01H 3/06;** E01B 27/16

(86) Internationale Anmeldenummer:
**PCT/EP2020/061269**

(87) Internationale Veröffentlichungsnummer:
**WO 2020/233933 (26.11.2020 Gazette 2020/48)**

(54) **VERFAHREN UND VORRICHTUNG ZUM STEUERN/REGELN EINES ROTATORISCHEN ANTRIEBS EINES ARBEITSAGGREGATES EINER GLEISBAUMASCHINE**

METHOD AND APPARATUS FOR CONTROLLING/REGULATING A ROTARY DRIVE OF A WORK UNIT OF A TRACK LAYING MACHINE

PROCÉDÉ ET DISPOSITIF DE COMMANDE/RÉGULATION D'UN ENTRAÎNEMENT ROTATIF D'UN ORGANE DE TRAVAIL D'UNE MACHINE DE POSE DE VOIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2019 AT 1932019**

(43) Veröffentlichungstag der Anmeldung:
**30.03.2022 Patentblatt 2022/13**

(73) Patentinhaber: **Plasser & Theurer Export Von Bahnbaumaschinen Gesellschaft m.b.H.**
**1010 Wien (AT)**

(72) Erfinder:
• **QUITTNER, Markus**
**4020 Linz (AT)**

• **DAXBERGER, Harald**
**4040 Linz (AT)**
• **BÖCK, Reinhard**
**4082 Aschach an der Donau (AT)**

(74) Vertreter: **Haas, Franz**
**Plasser & Theurer**
**Export von Bahnbaumaschinen Gesellschaft m.b.H.**
**Johannesgasse 3**
**1010 Wien (AT)**

(56) Entgegenhaltungen:
**US-A1- 2002 183 947    US-A1- 2019 017 226**

**Beschreibung**

Gebiet der Technik

Die Erfindung betrifft ein Verfahren zum Steuern/Regeln eines rotatorischen Antriebs eines Arbeitsaggregates einer Gleisbaumaschine, wobei mittels eines Sensors eine aus einer Rotation des Antriebs abgeleitete Messgröße mit einer annähernd periodischen Verlaufsfunktion erfasst wird, wobei mittels einer Auswerteeinrichtung eine Frequenz oder Periodendauer der Verlaufsfunktion bestimmt wird und wobei die Frequenz oder Periodendauer mit einer Sollgröße zur Vorgabe eines Stellsignals abgeglichen wird. Zudem betrifft die Erfindung eine Vorrichtung zur Durchführung des Verfahrens.

Stand der Technik

Aus der Veröffentlichung Auer F. et al.: High-Tech-Stopfaggregate für nachhaltige Gleislageverbesserung, EI-Eisenbahningenieur, November 2015, Seiten 18-22, ist ein Verfahren zur Drehzahlregelung eines rotatorischen Antriebs eines Stopfaggregats bekannt. Angetrieben wird eine Exzenterwelle zur Erzeugung einer Vibration, die über Beistellantriebe auf Stopfpickel übertragen wird.

Damit ist die Möglichkeit gegeben, während eines Stopfzyklus die Vibrationsfrequenz gezielt zu verändern. Eine höhere Frequenz (42-50 Hz) wird während eines Eintauchvorgangs der Stopfpickeln in ein Schotterbett vorgegeben. Während eines Bestellvorgangs der Stopfpickel liegt die optimale Frequenz bei 35 Hz. Im hochgehobenen Zustand wird eine verringerte Leerlauffrequenz (ca. 28 Hz) eingestellt, bei der das Aggregat am ruhigsten läuft.

Bei einer Stopfmaschine mit Drehzahlregelung ist auch eine Phasenstabilisierung bekannt. Dabei werden im Leerlauf die Drehzahlen aller Vibrationserzeuger synchronisiert und eine jeweilige Phasenverschiebung der rotierenden Antriebe wird so eingestellt, dass Vibrationsüberlagerungen minimiert werden.

Rotatorische Vibrationsantriebe kommen auch in anderen Arbeitsaggregaten von Gleisbaumaschinen zum Einsatz. Beispielsweise offenbart die WO 2008/009314 A1 einen sogenannten Gleisstabilisator, bei dem Stabilisationsaggregate mit rotierenden Unwuchten in Schwingung versetzt werden. Dabei werden zwei synchronisierte Stabilisationsaggregate mit einer einstellbaren Schwingungsfrequenz betrieben.

Aus Hauke R. et al.: Bettungsreinigungsmaschinen - ein Überblick, EI-Spezial Gleisbaumaschinen und -geräte, Mai 2016, Seiten 30-35 sind zudem Bettungsreinigungsmaschinen mit diversen Siebanlagen bekannt. Dabei kommen ebenfalls rotatorische Antriebe mit einstellbarer Vibrationsfrequenz zum Einsatz. US2019/017226 offenbart ein Verfahren zum Steuern einer Gleisbaumaschine.

Zusammenfassung der Erfindung

Der Erfindung liegt die Aufgabe zugrunde, ein Verfahren der eingangs genannten Art dahingehend zu verbessern, dass eine genaue Bestimmung der Frequenz oder Periodendauer mit einer raschen Änderungserfassung durchführbar ist. Weiter ist es eine Aufgabe der Erfindung, eine entsprechende Vorrichtung zur Durchführung des verbesserten Verfahrens anzugeben.

Erfindungsgemäß werden diese Aufgaben gelöst durch die Merkmale der Unabhängigen Ansprüche 1 und 11. Vorteilhafte Weiterbildungen der Erfindung ergeben sich aus den abhängigen Ansprüchen.

Dabei wird für die Messgröße eine Reihe zeitdiskreter Messwerte gebildet und mittels einer Rechnereinheit wird eine Autokorrelation dieser Messwerte zur Bestimmung der Frequenz oder Periodendauer durchgeführt. Gegenüber einer herkömmlichen Methode mit Nulldurchgangserfassung ist damit auch zwischen zwei Nulldurchgängen eine genaue Erfassung von Frequenzänderungen möglich. Mit den erfassten zeitdiskreten Messwerten sind jederzeit Funktionswerte einer Autokorrelationsfunktion bestimmbar. Ergebnis einer entsprechenden Funktionsberechnung sind Funktionswerte über einer Zeitachse. Auf der Zeitachse gibt eine Zeitspanne zwischen Null und einem ersten auftretenden Maximum die Periodendauer der Verlaufsfunktion der Messgröße an. Damit ist mit jedem neu erfassten Messwert sofort eine Neubestimmung der Frequenz durchführbar.

In einer Weiterbildung der Erfindung wird mittels eines weiteren Sensors eine aus einer Rotation eines weiteren Antriebs abgeleitete weitere Messgröße mit einer annähernd periodischen Verlaufsfunktion erfasst, wobei für die weitere Messgröße eine weitere Reihe zeitdiskreter Messwerte gebildet wird und wobei mittels der Rechnereinheit eine Kreuzkorrelation der Messwerte beider Messgrößen zur Bestimmung einer Phasenverschiebung durchgeführt wird. Durch die jederzeit durchführbare Kreuzkorrelation ist eine Abweichung vorgegebener Phasenverschiebungen sofort erkennbar. Damit ist eine genaue Synchronisation mehrerer rotatorischer Antriebe (Phasenstabilisierung) sichergestellt.

Vorteilhafterweise wird zur Bildung der zeitdiskreten Messwerte eine Taktzeit vorgegeben, wobei die Taktzeit eine Auswerteperiode bestimmt. Auf diese Weise wird mit jedem neu erfassten Messwert eine Auswertung der Frequenz oder Periodendauer und gegebenenfalls der Phasenverschiebung durchgeführt. Die Genauigkeit des Verfahrens steigt dabei mit abnehmender Taktzeit.

Eine weitere Verbesserung sieht vor, dass mit jedem neuen Messwert eine iterative Berechnung von Funktionswerten einer Korrelationsfunktion durch Summenbildung einer gleichbleibenden Anzahl von Messwertprodukten erfolgt. Damit wird der Rechenaufwand begrenzt und die Möglichkeit für weitere Vereinfachungen geschaffen.

Dabei ist es insbesondere sinnvoll, für eine aktuelle Berechnung eines Funktionswertes von der Summe der Messwertprodukte der vorangegangenen Berechnung das Messwertprodukt mit dem ältesten Messwert zu subtrahieren und ein neues Messwertprodukt mit dem aktuellen Messwert zu addiert. Auf diese Weise sind nur wenige Rechenoperationen notwendig, um die Funktionswerte der Korrelationsfunktion zu aktualisieren. Durch die geringen Anforderungen an die Rechenleistung sind die Berechnungen mit einer kostengünstigen und platzsparenden Rechnereinheit nahezu in Echtzeit durchführbar.

Eine weitere Verbesserung sieht vor, dass vor einer Berechnung von Funktionswerten einer Korrelationsfunktion interpolierte Messwerte ermittelt werden. Durch Interpolation zusätzlicher Messwerte zwischen den gegebenen Folgewerten ist die Lage des Maximums der Korrelationsfunktion genauer bestimmbar. Auf diese Weise ist die Bestimmung der Frequenz bzw. Periodendauer genauer durchführbar.

Die Qualität der Frequenzbestimmung wird zudem erhöht, wenn die Messwerte vor einer Berechnung von Funktionswerten einer Korrelationsfunktion gefiltert werden. Beispielsweise erfolgt eine Messsignalaufbereitung mittels eines sogenannten Infinite Impulse Response Filters (IIR-Bandpassfilter 4. Ordnung). Dabei eliminiert ein Hochpass einen Gleichanteil des Signals, während ein Tiefpass hochfrequente Störungen im Signal dämpft und entfernt. IIR-Filter haben außerdem den Vorteil, dass sie im Gegensatz zu anderen digitalen Filter-Typen (z.B. FIR-Filter) wesentlich weniger Rechenoperationen aufweisen. Diese Eigenschaft ist hier von großem Nutzen, weil die Anforderungen an die Rechenleistung der Rechnereinheit begrenzt bleiben.

Verbessert wird das Verfahren auch dadurch, dass vor einer Bestimmung eines Maximums der Korrelationsfunktion interpolierte Funktionswerte ermittelt werden. Sinnvollerweise wird die Interpolation nur im Bereich um die Extremwerte interpoliert, um die Lage der Extremwerte genauer bestimmen zu können. Die gesteigerte Genauigkeit ist dadurch mit geringem Rechenaufwand erreichbar.

In einer vorteilhaften Ausprägung der Erfindung wird als Messgröße ein Abstand eines sensitiven Elements des Sensors zu einer mit dem Antrieb angetriebenen Exzenterwelle erfasst. Aufgrund der Fehlertoleranz bei der Frequenzbestimmung mittels Korrelationsfunktion besteht dabei keine Notwendigkeit einer präzisen Montage des Sensors oder eines Kalibriervorgangs. Falls der Antrieb eine Exzenterwelle aus ferromagnetischem Material antreibt, ist ein induktiver Abstandssensor ohne zusätzliche Anpassungen der rotierenden Teile nutzbar.

Eine alternative Ausprägung sieht vor, dass als Messgröße eine auf den Sensor wirkende Feldstärke eines mit dem Antrieb in Rotation versetzten Magnetfeldes erfasst wird. Dabei wird eine angetriebene Welle magnetisiert oder mit einem Magneten ergänzt, um ein drehendes Magnetfeld zu erzeugen. Der zusätzliche Platzbedarf ist auch bei Anbringung eines Magneten gering. Mittels eines geeigneten Sensors in der Nähe der Welle wird die sich während einer Wellenumdrehung ändernde Feldstärke erfasst.

Die erfindungsgemäße Vorrichtung zur Durchführung eines der beschriebenen Verfahren umfasst einen Sensor zur Erfassung einer aus einer Rotation eines Antriebs abgeleiteten Messgröße mit annähernd periodischer Verlaufsfunktion, eine Auswerteeinrichtung zur Bestimmung einer Frequenz oder einer Periodendauer der Verlaufsfunktion und eine Baugruppe zur geregelten Ansteuerung des Antriebs. Dabei sind einer Rechnereinheit zeitdiskrete Messwerte der Messgröße zugeführt, wobei in der Rechnereinheit ein Algorithmus zur Durchführung einer Autokorrelation dieser Messwerte zur Bestimmung der Frequenz oder Periodendauer eingerichtet ist. Damit ist mit jedem neu erfassten Messwert sofort eine genaue Frequenzbestimmung durchführbar.

In einer verbesserten Vorrichtung ist ein weiterer Sensor zur Erfassung einer aus einer Rotation eines weiteren Antriebs abgeleiteten weiteren Messgröße angeordnet, wobei der Rechnereinheit zeitdiskrete Messwerte der weiteren Messgröße zugeführt sind und wobei in der Rechnereinheit ein Algorithmus zur Durchführung einer Kreuzkorrelation der Messwerte beider Messgrößen zur Bestimmung einer Phasenverschiebung eingerichtet ist. Damit ist eine einfache Anordnung zur Phasenstabilisierung angegeben.

Zur Realisierung der Vorrichtung mit wenigen und kompakten Komponenten ist es sinnvoll, wenn die Rechnereinheit ein Mikroprozessor ist. Dabei kommen optimierte Algorithmen und eine effiziente Implementierung des Signalverarbeitungspfades zur Anwendung, um die Rechenleistung an die Eigenschaften des Mikroprozessors samt begrenztem Arbeitsspeicher anzupassen.

Vorteilhafterweise ist die Rechnereinheit mit einer Kommunikationsschnittstelle in einer ersten Baugruppe angeordnet, wobei für den Antrieb eine eigene Baugruppe, welche eine Leistungselektronik, eine Reglereinheit und eine Kommunikationsschnittstelle umfasst, mit der ersten Baugruppe gekoppelt ist. Die getrennten Baugruppen ermöglichen eine einfache Skalierung der Vorrichtung. Auf diese Weise ist die Rechnereinheit für Frequenz- bzw. Periodendauerbestimmung mehrerer Antriebe einsetzbar.

Zur effizienten Erfassung der Messgröße ist es von Vorteil, wenn der Sensor ein sensitives Element zur kapazitiven oder induktiven oder magnetischen Erfassung der Messgröße umfasst. Für die Montage des Sensors bestehen keine besonderen Anforderungen, weil weder Versatz noch der genaue Wert der Amplitude des Sensorsignals für die weitere Verarbeitung relevant sind.

Kurze Beschreibung der Zeichnungen

Die Erfindung wird nachfolgend in beispielhafter Weise unter Bezugnahme auf die beigefügten Figuren erläutert. Es zeigen in schematischer Darstellung:

Fig. 1    Gleisbaumaschine mit Stopfaggregat
Fig. 2    Gleisbaumaschine mit Stabilisationsaggregat
Fig. 3    Stopfaggregat in einer Seitenansicht
Fig. 4    Querschnitt durch Gleis mit Stopfmaschine
Fig. 5    Sensor mit Abstandsmessung
Fig. 6    Sensor mit Feldstärkenmessung
Fig. 7    Messwerte
Fig. 8    Korrelationsfunktion
Fig. 9    Bildung von Funktionstermen
Fig. 10   Systemdarstellung
Fig. 11   Systemdarstellung mit Baugruppen
Fig. 12   Schema einer Signalverarbeitung

Beschreibung der Ausführungsformen

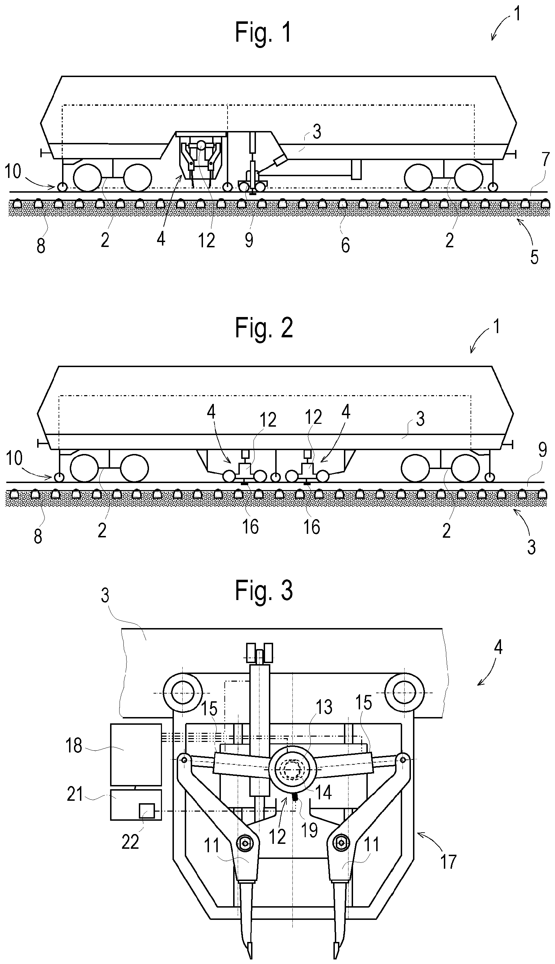

Die in Fig. 1 dargestellte Gleisbaumaschine 1 ist eine Stopfmaschine und umfasst einen auf Schienenfahrwerken 2 verfahrbaren Maschinenrahmen 3. Am Maschinenrahmen 3 ist als Arbeitsaggregat 4 ein Stopfaggregat angeordnet. Die Stopfmaschine dient der Bearbeitung eines Gleises 5, bei dem auf Schwellen 6 befestigte Schienen 7 in einem Schotterbett 8 gelagert sind. Beim Stopfvorgang wird der aus Schwellen 6 und Schienen 7 gebildete Gleisrost mittels eines Hebe-/Richtaggregats 9 und eines Messsystems 10 in eine Solllage gehoben und gegebenenfalls seitlich verschoben. Zur Fixierung dieser Lage tauchen vibrierende Stopfwerkzeuge 11 des Arbeitsaggregats 4 in das Schotterbett 8 ein. Die eingetauchten Stopfwerkzeuge 11 werden zueinander beigestellt und verdichten dabei Schotter unterhalb der angehobenen Schwellen 6.

Zur Erzeugung der Vibration sind die Stopfwerkzeuge 11 mit einem Schwingungserzeuger 12 gekoppelt. Der Schwingungserzeuger 12 umfasst einen rotatorischen Antrieb 13, der eine Exzenterwelle 14 antreibt. An der Exzenterwelle 14 sind Beistellantriebe 15 gelagert. Bei rotierender Exzenterwelle 14 erzeugt deren Exzentrizität die gewünschte Vibrationsamplitude.

Nach einem Stopfvorgang wird das Gleis 5 in der Regel stabilisiert, um Setzungen vorwegzunehmen. Dazu dient die in Fig. 2 dargestellte Gleisbaumaschine 1. Dabei handelt es sich um einen Dynamischen Gleisstabilisator (DGS) mit zwei Stabilisationsaggregaten als Arbeitsaggregate 4. Jedes Stabilisationsaggregat umfasst einen Schwingungserzeuger 12 mit rotierenden Unwuchten, die mittels eines rotatorischen Antriebs 13 angetrieben werden. Der aktive Schwingungserzeuger 12 versetzt das Stabilisationsaggregat quer zur Gleislängsrichtung in Schwingung. Dabei umklammert das Stabilisationsaggregat mit Rollzangen 16 die Schienen 7 des Gleises 5, wodurch sich die Schwingung auf den Gleisrost überträgt. Das bewirkt ein Einrütteln des Gleisrostes in das Schotterbett 8.

Sowohl bei Stopfen als auch bei Stabilisieren sowie bei weiteren im Gleisbau verwendeten Schwingungserzeugern 12 soll die erzeugte Vibration verschiedenen Vorgaben entsprechen. Beispielsweise ist zur optimalen Schotterverdichtung eine Vibrationsfrequenz von 35 Hz vorgegeben. Für einen Eintauchvorgang der Stopfwerkzeuge 11 ist eine höhere Frequenz f von ca. 45 Hz erwünscht, um den Eintauchwiderstand herabzusenken. Außerhalb des Schotterbettes 8 soll die Frequenz f niedriger sein, um die Lärmbelastung zu vermindern.

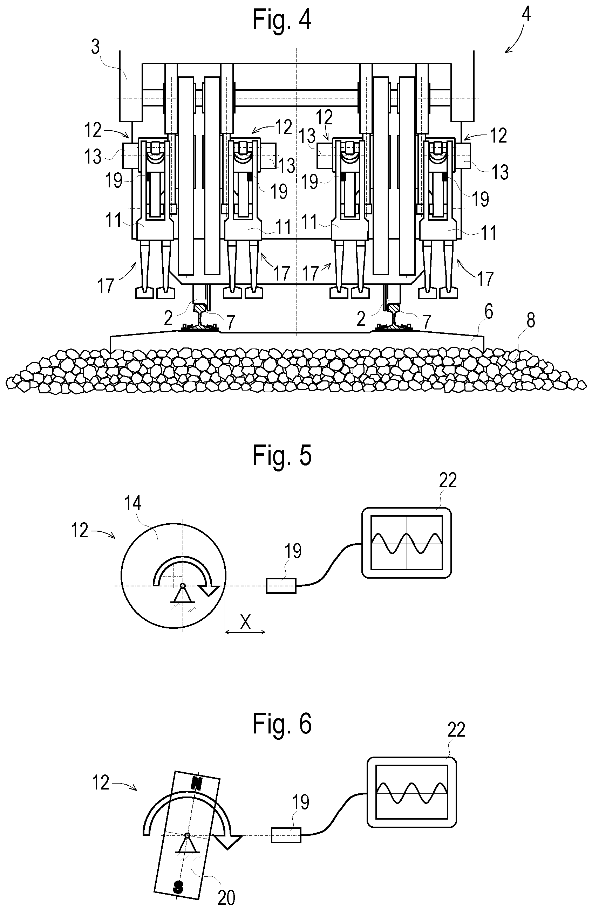

Weitere Anforderungen werden mit Bezug auf das Arbeitsaggregat 4 in den Figuren 3 und 4 erläutert. Das Arbeitsaggregat 4 umfasst vier Stopfeinheiten 17, die separat voneinander mittels eines Höhenverstellantriebs in das Schotterbett 8 absenkbar sind. Bei jeder Stopfeinheit 17 sind gegenüberliegende Stopfwerkzeuge 11 über Beistellantriebe 15 mit einem eigenen Schwingungserzeuger 12 gekoppelt. Über eine gemeinsame Steuerungseinrichtung 18 werden die Schwingungserzeuger 12 angesteuert. Für die erzeugten Vibrationen sind neben der Frequenz f untereinander Phasenverschiebungen $\varphi$ vorgegeben. Gewünscht ist in der Regel eine gegengleiche Synchronisation der Stopfeinheiten, um die auf den Maschinenrahmen 3 rückwirkenden Vibrationen sowie die Lärmentwicklung zu minimieren.

Für das Steuern/Regeln eines rotatorischen Antriebs 13 in einem Schwingungserzeuger 12 ist es notwendig, laufend die Frequenzen f oder die Periodendauer T zu erfassen. Zudem bestehen im Gleisbau hohe Anforderungen an die Robustheit einer Sensoranordnung. Bekannt ist die Auswertung von Nulldurchgängen mit dem Nachteil, dass damit Frequenzänderungen verzögert erkannt werden. Deshalb ist erfindungsgemäß vorgesehen, die Frequenz f bzw. die Periodendauer T mittels Autokorrelation zu bestimmen. Basis dafür bildet eine Messgröße X, die einen annähernd periodischen Funktionsverlauf der erzeugten Schwingung repräsentiert.

Dazu ist ein Sensor 19 angeordnet, der mit dem Schwingungserzeuger 12 magnetisch, induktiv oder kapazitiv gekoppelt ist. Beispielsweise umfasst der in Fig. 5 dargestellte Abstandssensor 19 ein sensitives Element, das über induktive Kopplung eine Distanz zu einer exzentrischen Mantelfläche einer Exzenterwelle 14 misst. Diese sich bei rotierender Exzenterwelle 14 ändernde Distanz ist die Messgröße X, deren annähernd periodischer Verlauf in weiterer Folge ausgewertet wird.

Alternativ dazu ist in Fig. 6 eine magnetische Komponente 20 eines Schwingungserzeugers 12 angeordnet, die mittels des rotatorischen Antriebs 13 in Drehung versetzt wird. Dabei entsteht ein rotierendes Magnetfeld, das mittels eines feststehenden Sensors 19 erfasst wird. Bei dieser Variante wird die sich während einer Umdrehung ändernde Feldstärke als Messgröße X erfasst und ausgewertet.

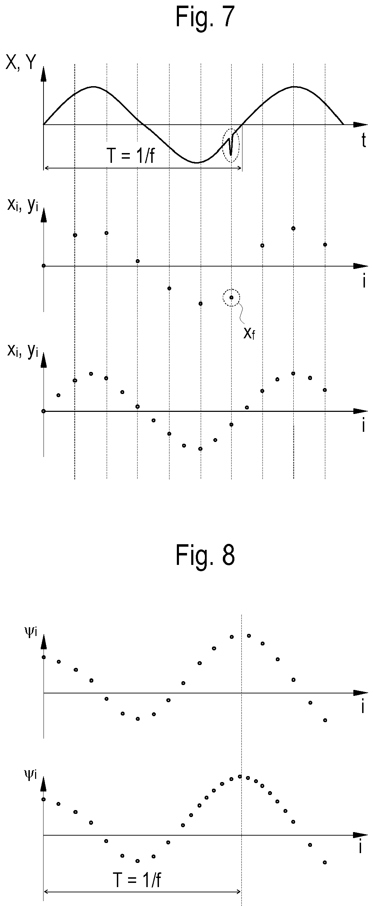

Fig. 7 zeigt eine beispielhafte Verarbeitung der Messgröße X (bzw. Y für einen weiteren Schwingungserzeuger 12). Im oberen Diagramm ist ein Messgrößenverlauf über der Zeit t dargestellt. Dabei handelt es sich um eine annähernd periodische Verlaufsfunktion, wobei infolge von äußeren Einflüssen Störungen auftreten können. Ziel der folgenden Verfahrensschritte ist die Bestimmung der Periodendauer T bzw. der Frequenz f = 1/T. Für die Messgröße X werden im zweiten Diagramm Messwerte $x_i$ (bzw. $y_i$ für einen weiteren Schwingungserzeuger 12) erfasst, wobei der zeitliche Abstand zwischen den Messwerten $x_i$ durch eine Taktzeit vorgegeben ist. Dazu erfolgt entweder eine getaktete Abfrage des Sensors 19 oder es wird aus einem analogen Sensorsignal mittels eines Analog-Digital-Wandlers eine zeitdiskrete Reihe von Messwerten $x_i$ gebildet (Reihenwerte mit Index i).

Vorteilhafterweise werden mittels eines digitalen Filters fehlerhafte Messwerte xf erkannt und eliminiert. Zudem ist es sinnvoll, das Sensorsignal mittels eines IIR-Filters beispielsweise vierter Ordnung zu verbessern. Dabei entfernt ein Hochpass zweiter Ordnung Gleichanteile und ein Tiefpass zweiter Ordnung dämpft hochfrequente Störungen des Signals.

In einem nächsten Schritt erfolgt eine Interpolation des Messwerteverlaufs, um eine verbesserte Datenbasis zur Bildung der Autokorrelationsfunktion $\Psi_{xx}(i)$ zu erhalten. Beispielsweise wird zwischen jedem erfassten Messwert $x_i$ ein zusätzlicher Wert interpoliert (3. Diagramm in Fig. 7).

Ein beispielhafter Verlauf der Funktionswerte $\psi_i$ der Autokorrelationsfunktion $\Psi_{xx}(i)$ ist in Fig. 8 dargestellt. Die Werte $\psi_i$ der Autokorrelationsfunktion $\Psi_{xx}(i)$ ergeben sich dabei wie folgt aus einer Summenbildung von Messwertprodukten $x_n \cdot x_{n-i}$:

$$\Psi_{xx}(i) = \sum_n x_n \cdot x_{n-i}$$

Für die vorliegende Erfindung ist es sinnvoll, wenn für jeden Funktionswert $\psi_i$ eine gleichbleibende Anzahl an Messwertprodukten summiert wird.

Günstigerweise erfolgt mit jedem durch die Taktzeit vorgegebenen Takt eine Auswertung der Frequenz f bzw. der Periodendauer T durch Neuberechnung der Autokorrelationsfunktion $\Psi_{xx}(i)$. Dabei wird bei einer aktuellen Berechnung eines Funktionswertes von der Summe der Messwertprodukte der vorangegangenen Berechnung das Messwertprodukt mit dem ältesten Messwert subtrahiert und ein neues Messwertprodukt mit dem aktuellen Messwert addiert wird:

$$\sum_{(i,t+1)} = \sum_{(i,t)} - x_{(2n-i,t)} \cdot x_{(2n,t)} + x_{(0,t)} \cdot x_{(i,t)}$$

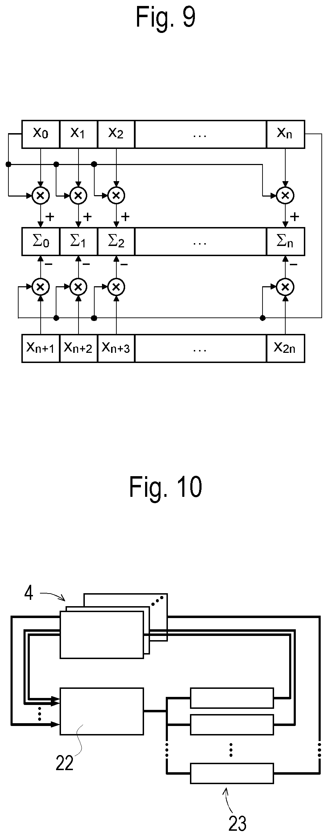

Die entsprechende Summenbildung ist in Fig. 9 veranschaulicht. Durch diese einfache iterative Vorgehensweise ist die fortlaufende Berechnung der Autokorrelationsfunktion $\Psi_{xx}(i)$ mit begrenzter Rechenleistung nahezu in Echtzeit durchführbar.

Aus dem im oberen Diagramm der Fig. 8 dargestellten Verlauf der Funktionswerte $\psi_i$ werden in einem Optimierungsschritt weitere Funktionswerte interpoliert. Das Ergebnis ist im unteren Diagramm ersichtlich. Da die zu ermittelnde Periodendauer T durch die Lage des ersten Maximums (außer bei null) bestimmt ist, wird sinnvollerweise nur in diesem Bereich eine Interpolation durchgeführt. Dieser zu erwartende Bereich ist durch die vorgegebenen Frequenzen im Gleisbau in der Regel bekannt.

Zur Durchführung der angegebenen Verfahrensschritte ist in einer Auswerteeinrichtung 21 eine Rechnereinheit 22 angeordnet. Dabei sind in der Systemdarstellung in Fig. 10 der Rechnereinheit 22 die Messwerte $x_i$ mehrerer Schwingungserzeuger 12 eines angesteuerten Arbeitsaggregats 4 zugeführt. Ausgangsseitig werden die einzelnen Antriebe 13 des Arbeitsaggregats 4 über zugeordnete Leistungsstufen 23 angesteuert.

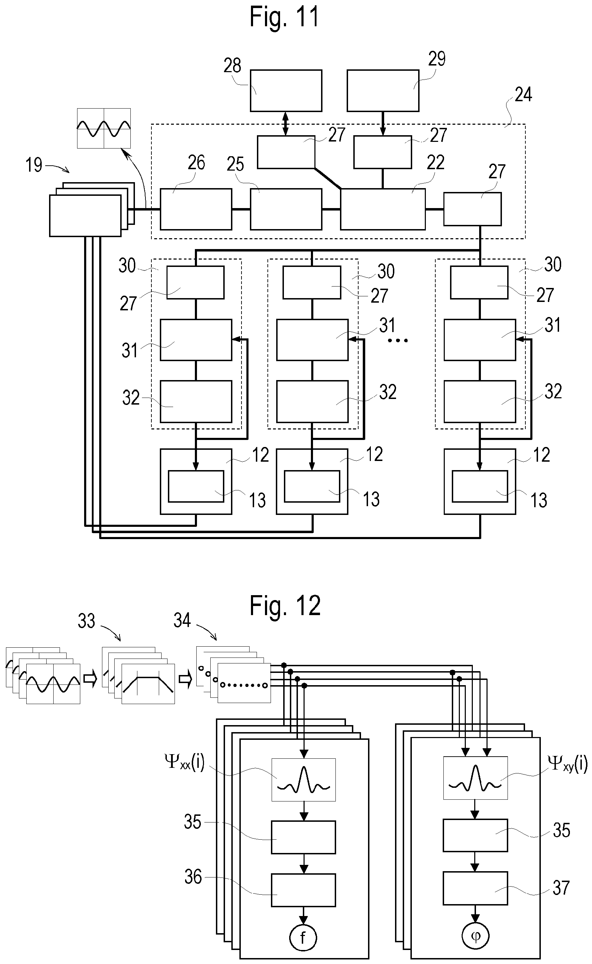

Detaillierter ist dieser Systemaufbau in Fig. 11 dargestellt. Eine erste Baugruppe 24 umfasst die Rechnereinheit 22, einen Analog-Digital-Konverter 25, eine Vorverarbeitungseinheit 26 und Kommunikationsschnittstellen 27. Messsignale der Sensoren 19 werden über die Vorverarbeitungseinheit 26 und den Analog-Digital-Konverter 25 für die Rechnereinheit 22 aufbereitet. Konkret werden zeitdiskrete Messwertreihen gebildet, die den jeweiligen periodischen Messwertverlauf repräsentieren.

Über die Kommunikationsschnittstellen 27 ist die Rechnereinheit 22 mit einer Konfigurations- und Diagnoseeinheit 28 und einer Steuerung 29 für die Vorgabe allgemeiner Steuerungsbefehle gekoppelt. Für jeden Schwingungserzeuger 12 ist zudem eine eigene Baugruppe 30 vorgesehen, die über Kommunikationsschnittstellen 27 mit der Rechnereinheit 22 gekoppelt sind. Dabei umfasst jede dieser Baugruppen 30 eine Reglereinheit 31 und eine Leistungselektronik 32 zur Ansteuerung des zugeordneten Antriebs 13.

Für vier gesteuerte/geregelte Schwingungserzeuger 12 eines Arbeitsaggregates 4 ist eine beispielhafte Verarbeitung der Messsignale bzw. Messwerte $x_i$ in Fig. 12 dargestellt. Jedem Schwingungserzeuger 12 ist ein Sensors 19 zur Erzeugung eines periodischen Verlaufs für die entsprechende Messgröße X zugeordnet. Daraus werden mit einer jeweiligen Filterung 33 und einer Abtastratenkonvertierung 34 Messwertreihen gebildet.

Für die Bestimmung der jeweiligen aktuellen Frequenz f wird aus den Messwertreihen eines Schwingungserzeugers 12 fortlaufend die Autokorrelationsfunktion $\Psi_{xx}(i)$ gebildet. Mittels einer Extremwertbestimmung 35 erfolgt daraus eine Frequenzbestimmung 36.

Für jeweils zwei Schwingungserzeuger 12 erfolgt parallel dazu drei Mal eine Bestimmung der zugeordneten Phasenverschiebung $\varphi$. Dazu wird zunächst aus den beiden Messwertreihen eine Kreuzkorrelation gebildet. Mit den Messwerten $x_i$ des einen Schwingungserzeugers 12 und den Messwerten $y_i$ des anderen Schwingungserzeugers 12 ergibt sich folgende Kreuzkorrelationsfunktion:

$$\Psi_{xy}(i) = \sum_n x_n \cdot y_{n-i}$$

Aus dem jeweils fortlaufend gebildeten Verlauf der Kreuzkorrelationsfunktion $\Psi_{xy}(i)$ erfolgt durch Extremwertbestimmung 35 die entsprechende Phasenverschiebungsbestimmung 37.

## Patentansprüche

1. Verfahren zum Steuern/Regeln eines rotatorischen Antriebs (13) eines Arbeitsaggregates (4) einer Gleisbaumaschine (1), wobei mittels eines Sensors (19) eine aus einer Rotation des Antriebs (13) abgeleitete Messgröße (X) mit einer annähernd periodischen Verlaufsfunktion erfasst wird, wobei mittels einer Auswerteeinrichtung (21) eine Frequenz (f) oder Periodendauer (T) der Verlaufsfunktion bestimmt wird und wobei die Frequenz (f) oder Periodendauer (T) mit einer Sollgröße zur Vorgabe eines Stellsignals abgeglichen wird, **dadurch gekennzeichnet, dass** für die Messgröße (X) eine Reihe zeitdiskreter Messwerte ($x_i$) gebildet wird und dass mittels einer Rechnereinheit (22) eine Autokorrelation dieser Messwerte ($x_i$) zur Bestimmung der Frequenz (f) oder Periodendauer (T) durchgeführt wird.

2. Verfahren nach Anspruch 1, **dadurch gekennzeichnet, dass** mittels eines weiteren Sensors (19) eine aus einer Rotation eines weiteren Antriebs (13) abgeleitete weitere Messgröße (Y) mit einer annähernd periodischen Verlaufsfunktion erfasst wird, dass für die weitere Messgröße (Y) eine weitere Reihe zeitdiskreter Messwerte ($y_i$) gebildet wird und dass mittels der Rechnereinheit (22) eine Kreuzkorrelation der Messwerte ($x_i$, $y_i$) beider Messgrößen (X, Y) zur Bestimmung einer Phasenverschiebung ($\varphi$) durchgeführt wird.

3. Verfahren nach Anspruch 1 oder 2, **dadurch gekennzeichnet, dass** zur Bildung der zeitdiskreten Messwerte ($x_i$) eine Taktzeit vorgegeben wird und dass die Taktzeit eine Auswerteperiode bestimmt.

4. Verfahren nach einem der Ansprüche 1 bis 3, **dadurch gekennzeichnet, dass** mit jedem neuen Messwert ($x_i$) eine iterative Berechnung von Funktionswerten ($\psi_i$) einer Korrelationsfunktion durch Summenbildung einer gleichbleibenden Anzahl von Messwertprodukten erfolgt.

5. Verfahren nach Anspruch 4, **dadurch gekennzeichnet, dass** für eine aktuelle Berechnung eines Funktionswertes ($\psi_i$) von der Summe der Messwertprodukte der vorangegangenen Berechnung das Messwertprodukt mit dem ältesten Messwert subtrahiert und ein neues Messwertprodukt mit dem aktuellen Messwert addiert wird.

6. Verfahren nach einem der Ansprüche 1 bis 5, **dadurch gekennzeichnet, dass** vor einer Berechnung von Funktionswerten ($\psi_i$) einer Korrelationsfunktion interpolierte Messwerte ermittelt werden.

**7.** Verfahren nach einem der Ansprüche 1 bis 6, **dadurch gekennzeichnet, dass** die Messwerte ($x_i$) vor einer Berechnung von Funktionswerten ($\psi_i$) einer Korrelationsfunktion gefiltert werden.

**8.** Verfahren nach einem der Ansprüche 1 bis 7, **dadurch gekennzeichnet, dass** vor einer Bestimmung eines Maximums der Korrelationsfunktion interpolierte Funktionswerte ($\psi_i$) ermittelt werden.

**9.** Verfahren nach einem der Ansprüche 1 bis 8, **dadurch gekennzeichnet, dass** als Messgröße (X) ein Abstand eines sensitiven Elements des Sensors (19) zu einer mit dem Antrieb (13) angetriebenen Exzenterwelle (14) erfasst wird.

**10.** Verfahren nach einem der Ansprüche 1 bis 8, **dadurch gekennzeichnet, dass** als Messgröße (X) eine auf den Sensor (19) wirkende Feldstärke eines mit dem Antrieb (13) in Rotation versetzten Magnetfeldes erfasst wird.

**11.** Vorrichtung zur Durchführung eines Verfahrens nach einem der Ansprüche 1 bis 10, mit einem Sensor (19) zur Erfassung einer aus einer Rotation eines Antriebs (13) abgeleiteten Messgröße (X) mit annähernd periodischer Verlaufsfunktion, mit einer Auswerteeinrichtung (21) zur Bestimmung einer Frequenz (f) oder einer Periodendauer (T) der Verlaufsfunktion und mit einer Steuerungseinrichtung (18) zur geregelten Ansteuerung des Antriebs (13), **dadurch gekennzeichnet, dass** einer Rechnereinheit (22) zeitdiskrete Messwerte ($x_i$) der Messgröße (X) zugeführt sind und dass in der Rechnereinheit (22) ein Algorithmus zur Durchführung einer Autokorrelation dieser Messwerte ($x_i$) zur Bestimmung der Frequenz (f) oder Periodendauer (T) eingerichtet ist.

**12.** Vorrichtung nach Anspruch 11, **dadurch gekennzeichnet, dass** ein weiterer Sensor (19) zur Erfassung einer aus einer Rotation eines weiteren Antriebs (13) abgeleiteten weiteren Messgröße (Y) angeordnet ist, dass der Rechnereinheit (22) zeitdiskrete Messwerte ($y_i$) der weiteren Messgröße (Y) zugeführt sind und dass in der Rechnereinheit (22) ein Algorithmus zur Durchführung einer Kreuzkorrelation der Messwerte ($x_i$, $y_i$) beider Messgrößen zur Bestimmung einer Phasenverschiebung ($\varphi$) eingerichtet ist.

**13.** Vorrichtung nach Anspruch 11 oder 12, **dadurch gekennzeichnet, dass** die Rechnereinheit (22) ein Mikroprozessor ist.

**14.** Vorrichtung nach einem der Ansprüche 11 bis 13, **dadurch gekennzeichnet, dass** die Rechnereinheit (22) mit einer Kommunikationsschnittstelle (27) in einer ersten Baugruppe (24) angeordnet ist und dass für den Antrieb (13) eine eigene Baugruppe (30), welche eine Leistungselektronik (32), eine Reglereinheit (31) und eine Kommunikationsschnittstelle (27) umfasst, mit der ersten Baugruppe (24) gekoppelt ist.

**15.** Vorrichtung nach einem der Ansprüche 11 bis 14, **dadurch gekennzeichnet, dass** der Sensor (19) ein sensitives Element zur kapazitiven oder induktiven oder magnetischen Erfassung der Messgröße (X) umfasst.

**Claims**

**1.** Method for controlling/regulating a rotatory drive (13) of a working unit (4) of a track maintenance machine (1), wherein a measurement parameter (X) deduced from a rotation of the drive (13) is recorded by means of a sensor (19) with an approximately periodic history function, wherein a frequency (f) or a period duration (T) of the history function is determined by means of an evaluation means (21), and wherein the frequency (f) or the period duration (T) is compared with a target parameter for stipulating a control signal, **characterised in that** a number of time-discrete measurement values ($x_i$) is formed for the measurement parameter (X), and **in that** an auto-correlation of these measurement values ($x_i$) is carried out by means of a calculation unit (22) for determining the frequency (f) or the period duration (T).

**2.** Method according to claim 1, **characterised in that** a further measurement parameter (Y) deduced from a rotation of a further drive (13) with an approximately periodic history function is recorded by means of a further sensor (19), that a further number of time-discrete measurement values ($y_i$) is formed for the further measurement parameter (Y), and that a cross-correlation of the measurement values ($x_i$, $y_i$) of both measurement parameters (X, Y) is carried out by means of the calculation unit (22) for determining a phase offset ($\varphi$).

**3.** Method according to claim 1 or 2, **characterised in that** a cycle time is stipulated for forming the time-discrete measurement values ($x_i$), and that the cycle time determines an evaluation period.

4. Method according to one of the claims 1 to 3, **characterised in that** an iterative calculation of function values ($\Psi_i$) of a correlation function is realised by means of summation of a consistently identical number of measurement value products with every new measurement value ($x_i$).

5. Method according to claim 4, **characterised in that** the measurement value product with the oldest measurement value is subtracted from the sum of the measurement value products of the preceding calculation for a current calculation of a function value ($\Psi_i$) and a new measurement value product is added to the current measurement value.

6. Method according to one of the claims 1 to 5, **characterised in that** interpolated measurement values are calculated prior to a calculation of function values ($\Psi_i$) of a correlation function.

7. Method according to one of the claims 1 to 6, **characterised in that** the measurement values ($x_i$) are filtered prior to a calculation of function values ($\Psi_i$) of a correlation function.

8. Method according to one of the claims 1 to 7, **characterised in that** interpolated function values ($\Psi_i$) are calculated prior to a determination of a maximum of the correlation function.

9. Method according to one of the claims 1 to 8, **characterised in that** a distance of a sensitive element of the sensor (19) to an eccentric shaft (14) driven with the drive (13) is recorded as a measurement parameter (X).

10. Method according to one of the claims 1 to 8, **characterised in that** a field strength of a magnetic field rotated with the drive (13) and acting on the sensor (19) is recorded as a measurement parameter (X).

11. Device for carrying out a method according to one of the claims 1 to 10, with a sensor (19) for recording a measurement parameter (X) deduced from a rotation of a drive (13) with an approximately periodic history function, with an evaluation means (21) for determining a frequency (f) or a period duration (T) of the history function, and with a controller (18) for the regulated control of the drive (13), **characterised in that** a calculation unit (22) is supplied with time-discrete measurement values ($x_i$) of the measurement parameter (X), and that an algorithm for carrying out an auto-correlation of these measurement values ($x_i$) is set up in the calculation unit (22) for determining the frequency (f) or the period duration (T).

12. Device according to claim 11, **characterised in that** a further sensor (19) is arranged for recording a further measurement parameter (Y) deduced from a rotation of a further drive (13), that the calculation unit (22) is supplied with time-discrete measurement values ($y_i$) of the further measurement parameter (Y), and **in that** an algorithm for carrying out a cross-correlation of the measurement values ($x_i$, $y_i$) of both measurement parameters is set up in the calculation unit (22) for determining a phase offset ($\varphi$).

13. Device according to claim 11 or 12, **characterised in that** the calculation unit (22) is a microprocessor.

14. Device according to one of the claims 11 to 13, **characterised in that** the calculation unit (22) is arranged in a first assembly (24) with a communication interface (27), and that a dedicated assembly (30), which comprises power electronics (32), a regulator unit (31) and a communication interface (27), is coupled with the first assembly (24) for drive (13).

15. Device according to one of the claims 11 to 14, **characterised in that** the sensor (19) comprises a sensitive element for the capacitve or inductive or magnetic recording of the measurement parameter (X).

**Revendications**

1. Procédé de commande/régulation d'un entraînement rotatif (13) d'un module de travail (4) d'une machine de pose de voie (1), dans lequel une grandeur de mesure (X) dérivée d'une rotation de l'entraînement (13) avec une fonction d'allure approximativement périodique est détectée au moyen d'un capteur (19), dans lequel une fréquence (f) ou durée de période (T) de la fonction d'allure est déterminée au moyen d'un dispositif d'évaluation (21) et dans lequel la fréquence (f) ou durée de période (T) est équilibrée avec une grandeur de consigne pour la prédéfinition d'un signal de réglage, **caractérisé en ce qu'**une série de valeurs de mesure discrètes dans le temps ($x_i$) est formée pour la grandeur de mesure (X) et qu'une autocorrélation de ces valeurs de mesure ($x_i$) est effectuée au moyen d'une unité centrale (22) pour la détermination de la fréquence (f) ou durée de période (T).

2. Procédé selon la revendication 1, **caractérisé en ce qu'**une autre grandeur de mesure (Y) dérivée d'une rotation d'un autre entraînement (13) avec une fonction d'allure approximativement périodique est détectée au moyen d'un autre capteur (19), qu'une autre série de valeurs de mesure discrètes dans le temps ($y_i$) est formée pour l'autre grandeur de mesure (Y) et qu'une corrélation croisée des valeurs de mesure ($x_i$, $y_i$) des deux grandeurs de mesure (X, Y) est effectuée au moyen de l'unité centrale (22) pour la détermination d'un déphasage (cp).

3. Procédé selon la revendication 1 ou 2, **caractérisé en ce qu'**un temps de cycle est prédéfini pour la formation des valeurs de mesure discrètes dans le temps ($x_i$) et que le temps de cycle détermine une période d'évaluation.

4. Procédé selon une des revendications 1 à 3, **caractérisé en ce qu'**un calcul itératif de valeurs fonctionnelles ($\psi_i$) d'une fonction de corrélation s'effectue par formation de sommes d'un nombre constant de produits de valeurs de mesure avec chaque nouvelle valeur de mesure ($x_i$).

5. Procédé selon la revendication 4, **caractérisé en ce que** pour un calcul actuel d'une valeur fonctionnelle ($\psi_i$), le produit de valeurs de mesure avec la valeur de mesure la plus ancienne est soustrait de la somme des produits de valeurs de mesure du calcul précédent et un nouveau produit de valeurs de mesure est ajouté à la valeur de mesure actuelle.

6. Procédé selon une des revendications 1 à 5, **caractérisé en ce que** des valeurs de mesure interpolées avant un calcul de valeurs fonctionnelles ($\psi_i$) d'une fonction de corrélation sont déterminées.

7. Procédé selon une des revendications 1 à 6, **caractérisé en ce que** les valeurs de mesure ($x_i$) sont filtrées avant un calcul de valeurs fonctionnelles ($\psi_i$) d'une fonction de corrélation.

8. Procédé selon une des revendications 1 à 7, **caractérisé en ce que** des valeurs fonctionnelles ($\psi_i$) interpolées avant une détermination d'un maximum de la fonction de corrélation sont déterminées.

9. Procédé selon une des revendications 1 à 8, **caractérisé en ce qu'**un écart d'un élément sensitif du capteur (19) par rapport à un arbre excentrique (14) entraîné avec l'entraînement (13) est détecté en tant que grandeur de mesure (X).

10. Procédé selon une des revendications 1 à 8, **caractérisé en ce qu'**une intensité de champ agissant sur le capteur (19) d'un champ magnétique mis en rotation avec l'entraînement (13) est détectée en tant que grandeur de mesure (X).

11. Dispositif pour la réalisation d'un procédé selon une des revendications 1 à 10, avec un capteur (19) pour la détection d'une grandeur de mesure (X) dérivée d'une rotation d'un entraînement (13) avec une fonction d'allure approximativement périodique, avec un dispositif d'évaluation (21) pour la détermination d'une fréquence (f) ou d'une durée de période (T) de la fonction d'allure et avec un dispositif de commande (18) pour la commande régulée de l'entraînement (13), **caractérisé en ce que** des valeurs de mesure discrètes dans le temps ($x_i$) de la grandeur de mesure (X) sont acheminées à une unité centrale (22) et qu'un algorithme pour la réalisation d'une autocorrélation de ces valeurs de mesure ($x_i$) est configuré dans l'unité centrale (22) pour la détermination de la fréquence (f) ou durée de période (T).

12. Dispositif selon la revendication 11, **caractérisé en ce qu'**un autre capteur (19) est disposé pour la détection d'une autre grandeur de mesure (Y) dérivée d'une rotation d'un autre entraînement (13), que des valeurs de mesure discrètes dans le temps ($y_i$) de l'autre grandeur de mesure (Y) sont acheminées à l'unité centrale (22) et qu'un algorithme pour la réalisation d'une corrélation croisée des valeurs de mesure ($x_i$, $y_i$) des deux grandeurs de mesure est configuré dans l'unité centrale (22) pour la détermination d'un déphasage ($\varphi$).

13. Dispositif selon la revendication 11 ou 12, **caractérisé en ce que** l'unité centrale (22) est un microprocesseur.

14. Dispositif selon une des revendications 11 à 13, **caractérisé en ce que** l'unité centrale (22) est disposé avec une interface de communication (27) dans un premier bloc (24) et que pour l'entraînement (13), un propre bloc (30) qui comprend une électronique de puissance (32), un module régulateur (31) et une interface de communication (27) est couplé au premier bloc (24).

15. Dispositif selon une des revendications 11 à 14, **caractérisé en ce que** le capteur (19) comprend un élément sensitif pour la détection capacitive ou inductive ou magnétique de la grandeur de mesure (X).

## Fig. 1

## Fig. 2

## Fig. 3

## Fig. 4

## Fig. 5

## Fig. 6

# Fig. 7

# Fig. 8

# Fig. 9

# Fig. 10

# Fig. 11

# Fig. 12

**IN DER BESCHREIBUNG AUFGEFÜHRTE DOKUMENTE**

**In der Beschreibung aufgeführte Patentdokumente**

- WO 2008009314 A1
- US 2019017226 A

**In der Beschreibung aufgeführte Nicht-Patentliteratur**

- **AUER F. et al.** High-Tech-Stopfaggregate für nachhaltige Gleislageverbesserung. *EI-Eisenbahningenieur,* November 2015, 18-22
- **HAUKE R. et al.** Bettungsreinigungsmaschinen - ein Überblick. *EI-Spezial Gleisbaumaschinen und -geräte,* Mai 2016, 30-35